# EUROPEAN PATENT APPLICATION

(11) **EP 1 041 369 A1**
(43) Date of publication of application: **04.10.2000**
(21) Application number: 00105421.2
(22) Date of filing: 15.03.2000
(51) Int. Cl.: G01F 22/00, G01F 23/00

(54) **Volumetric liquid metering device**

(30) Priority: 16.03.1999 IT BO990121
(71) Applicant: LA SERENA DI DE BORTOLI & C. s.n.c., 31100 Treviso (IT)
(72) Inventor: De Bortoli, Adriano, 31022 San Trovaso di Preganziol (IT)
(74) Representative: Cerbaro, Elena, Dr.

(57) **Abstract**

A volumetric metering device (1) for liquids, having a graduated vessel (11) and a measuring device (12) for measuring the quantity of liquid inside the vessel; the measuring device having ballast (16) suspended inside the graduated vessel (11), and a load cell (17) for determining, instant by instant, the weight of the ballast (16) and supplying an electric output signal as a function of the weight; and the ballast (16) being defined by a body having a specific weight greater than that of the liquid in the graduated vessel (11).

## Description

The present invention relates to a volumetric liquid metering device.

In particular, the present invention relates to a volumetric liquid additive metering device for use in concrete liquid additive metering systems, to which application the following description refers purely by way of example.

As is known, currently marketed systems for metering liquid additives for concrete normally comprise a volumetric metering device; a liquid additive storage tank; a pump unit for feeding the liquid additives from the storage tank to the volumetric metering device, and from the volumetric metering device to the user device (normally a concrete mixer); and a number of nonreturn valves for regulating flow of the liquid additives along the conduits connecting the pump unit to the storage tank and the user device.

The metering system may also comprise a control unit for driving the pump unit on the basis of signals from the volumetric metering device, so as to automatically supply the user device, upon command, with a predetermined quantity of liquid additives.

The volumetric metering device comprises a graduated vessel normally defined by a cylindrical tubular body made of transparent plastic material and closed at both ends by two plates secured to each other by ties; and a device for detecting the quantity of liquid in the vessel, and supplying an electric output signal as a function of the height of the liquid inside the graduated vessel.

In currently used embodiments of more advanced design, the device for detecting the quantity of liquid inside the vessel comprises a float movable axially inside the vessel; and a load cell for determining the force with which the float is pushed upwards by the liquid inside the graduated vessel.

Normally, the float is cylindrical, is coaxial with the longitudinal axis of the graduated vessel, and is of an axial length approximately equal to but no greater than the axial length of the graduated vessel.

The load cell is fitted to the top plate of the graduated vessel, outside the vessel, and is connected to the top end of the float by a supporting rod fitted through the top plate, so that the vertical thrust on the float is transmitted directly to the load cell by the supporting rod, which thus acts as a push rod.

The main drawback of volumetric metering devices of the above type lies in the detecting device failing to detect the exact quantity of liquid inside the graduated vessel, when the vessel contains only a small amount of liquid.

That is, as opposed to the float remaining coaxial with the longitudinal axis of the graduated vessel, the thrust imparted by the liquid tends to tilt the float, so that the vertical thrust detected by the load cell does not correspond with the actual vertical thrust on the float, part of which, in fact, is absorbed elastically by the supporting rod which, in this case, also bends.

Another drawback of the device for detecting the quantity of liquid inside the vessel lies in the load cell failing to accurately determine very small loads. As is known, in fact, the precision of any measuring instrument, and therefore also of a load cell, increases towards the top end of the measuring scale.

It is an object of the present invention to provide a volumetric metering device designed to eliminate the aforementioned drawbacks.

According to the present invention, there is provided a volumetric metering device for liquids, comprising a vessel and detecting means for determining the quantity of liquid inside the vessel; said detecting means determining the quantity of liquid inside said vessel and supplying an output signal as a function of said quantity; and the volumetric metering device being characterized in that said detecting means comprise ballast suspended inside the vessel so as to be immersible in the liquid; and a measuring device for determining the weight of said ballast and for supplying an output signal as a function of said weight; the signal as a function of the weight of the ballast indicating the quantity of liquid inside said vessel.

A non-limiting embodiment of the present invention will be described by way of example with reference to the accompanying drawings, in which:
Figure 1 shows a front view, with parts in section and parts removed for clarity, of a volumetric liquid metering device in accordance with the teachings of the present invention;
Figure 2 shows a schematic view of a liquid additive metering system featuring the volumetric metering device shown in Figure 1.

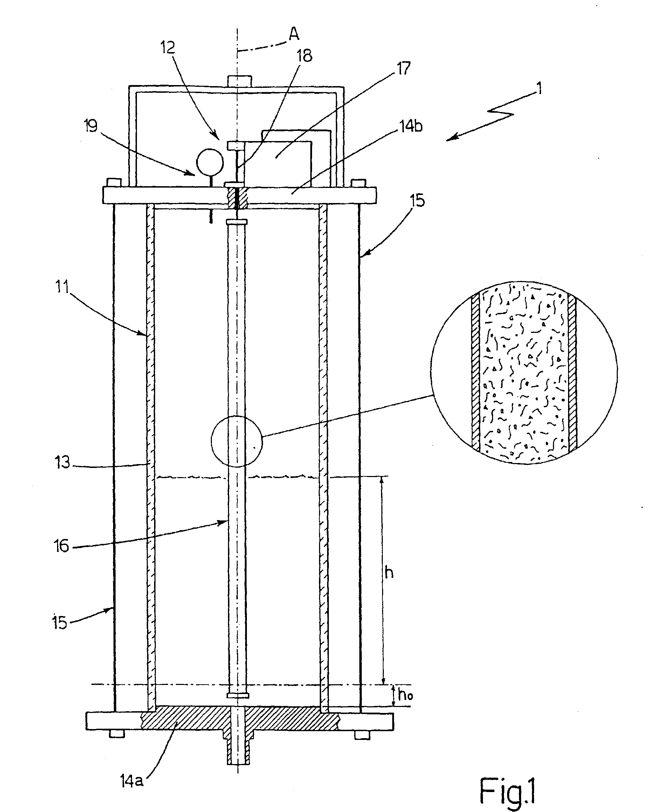

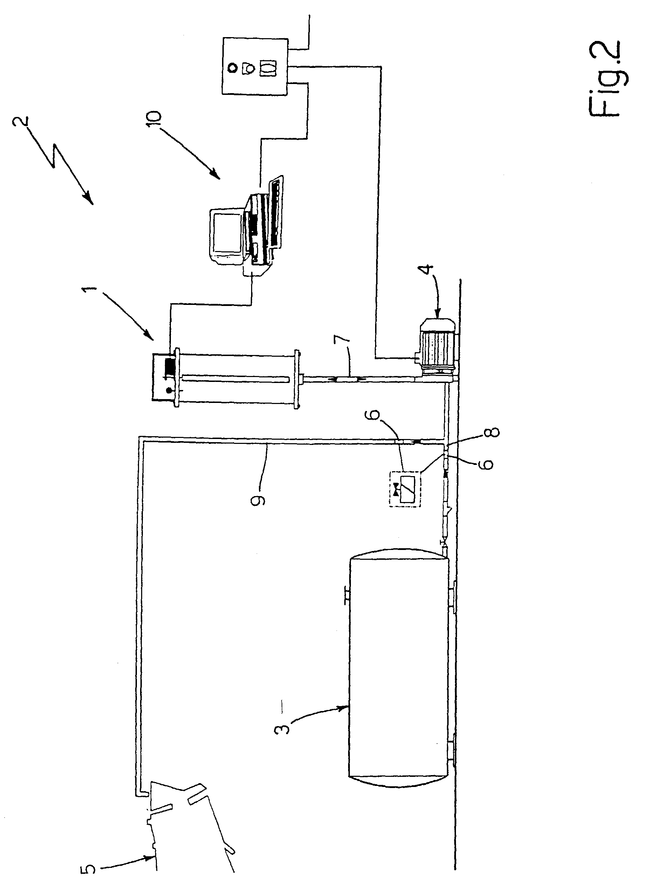

Number 1 in Figures 1 and 2 indicates as a whole a volumetric liquid metering device, which may be used to particular advantage in a concrete liquid additive metering system 2.

With reference to Figure 2, in addition to volumetric metering device 1, metering system 2, in the example shown, also comprises a liquid additive storage tank 3; a pump unit 4 for feeding the liquid additives from tank 3 to volumetric metering device 1, and from volumetric metering device 1 to a user device 5 defined, in the example shown, by a known concrete mixer; and a number of nonreturn valves 6 for regulating flow of the liquid additives along the pipes 7, 8 and 9 respectively connecting the pump unit to volumetric metering device 1, to tank 3, and to user device 5.

In the example shown, metering system 2 also comprises a control unit 10 for driving pump unit 4 as a function of signals from volumetric metering device 1, so as to automatically supply, upon command, a predetermined quantity of liquid additives from tank 3 to user device 5.

With reference to Figure 1, volumetric metering device 1 comprises a graduated vessel 11, in which the liquid to be metered is stored temporarily; and a detecting device 12 for determining the quantity of liquid inside the vessel, and which provides for determining, instant by instant, the height h of the liquid inside graduated vessel 11, and for supplying an electric output signal as a function of height h.

In the example shown, graduated vessel 11 is defined by a cylindrical tubular body 13 made of transparent plastic material and sealed at both ends by two cover plates 14a and 14b preferably, though not necessarily, made of metal material. Graduated vessel 11 is mounted so that the longitudinal axis A of cylindrical tubular body 13 is substantially vertical, and bottom plate 14a has a sleeve to which is fitted pipe 7 from pump unit 4.

For safety reasons and to ensure perfect sealing, plates 14a and 14b may be secured to each other by screw ties 15 to grip cylindrical tubular body 13 between the plates.

With reference to Figure 1, device 12 for detecting the quantity of liquid inside the vessel comprises ballast 16 located inside graduated vessel 11 so as to be immersible in the liquid; and a load cell 17 for detecting, instant by instant, the weight of ballast 16 and supplying an electric output signal as a function of said weight.

In the example shown, load cell 17 is fixed to top plate 14b of graduated vessel 11, preferably, but not necessarily, outside graduated vessel 11, and is connected to ballast 16 by a supporting rod 18 fitted through plate 14b, so that the weight of ballast 16 weighs entirely on load cell 17. As such, supporting rod 18 is subjected to pull, and therefore acts as a tie.

In the example shown, ballast 16 is defined by a tubular body made of plastic material, plugged at both ends, and filled with sand, cement or similar, so that the specific weight of the tubular body is greater than that of the liquid inside graduated vessel 11. Tubular body 16 extends coaxially with the longitudinal axis A of cylindrical tubular body 13, and is of an axial length approximately equal to but no greater than the axial length of cylindrical tubular body 13.

Volumetric metering device 1 preferably, though not necessarily, also comprises a safety probe 19 for determining when graduated vessel 11 is filled to capacity, and for commanding immediate turn-off of pump unit 4. Probe 19 is fitted to top plate 14b, and may be connected to control unit 10 or directly to pump unit 4.

Operation of volumetric metering device 1 is obvious: a body immersed in a liquid is subjected to an upward thrust proportional to the volume of liquid displaced. Said thrust, commonly referred to as "buoyancy", tends to oppose the weight force, and also acts on ballast 16, so that load cell 17 detects a gradual reduction in the weight of ballast 16 as the height h of the liquid inside graduated vessel 11 increases.

The electric output signal from load cell 17 is therefore a function of height h of the liquid inside graduated vessel 11.

For example, assuming load cell 17 supplies an electric output signal whose voltage increases in proportion to the weight on the cell, volumetric metering device 1 supplies an electric output signal whose voltage decreases as the height h of the liquid inside graduated vessel 11 increases. Appropriately amplified, the signal from the volumetric device is easily interpreted by control unit 10, which may therefore drive pump unit 4 automatically to supply, upon command and fully automatically, a predetermined quantity of liquid additives from tank 3 to user device 5.

It should be pointed out that, in use, volumetric metering device 1 is so set that the electric output signal from load cell 17 indicates height h with respect to a reference level at a height hₒ from the bottom of graduated vessel 11.

The advantages of volumetric metering device 1 will be clear from the foregoing description: firstly, there is no longer any problem of the float tilting and so impairing the measurement in the presence of small amounts of liquid inside graduated vessel 11; and secondly, using a load cell 17 with a full scale approximately equal to but no less than the weight of ballast 16, volumetric metering device 1 operates at all times in the maximum-precision region.

Clearly, changes may be made to volumetric liquid metering device 1 as described and illustrated herein without, however, departing from the scope of the present invention.

## Claims

1. A volumetric metering device (1) for liquids, comprising a vessel (11) and detecting means (12) for determining the quantity of liquid inside the vessel; said detecting means (12) determining the quantity of liquid inside said vessel (11) and supplying an output signal as a function of said quantity; and the volumetric metering device (1) being characterized in that said detecting means (12) comprise ballast (16) suspended inside the vessel (11) so as to be immersible in the liquid; and a measuring device (17) for determining the weight of said ballast (16) and for supplying an output signal as a function of said weight; the signal as a function of the weight of the ballast (16) indicating the quantity of liquid inside said vessel (11).

2. A volumetric metering device as claimed in Claim 1, characterized in that said measuring device (17) comprises a load cell (17).

3. A volumetric metering device as claimed in Claim 1 or 2, characterized in that said ballast (16) is defined by a body having a specific weight greater than that of the liquid inside the vessel (11).

4. A volumetric metering device as claimed in Claim 3, characterized in that said vessel (11) is defined by a first tubular body (13) sealed at both ends by two cover plates (14a, 14b); the graduated vessel (11) being so positioned that the longitudinal axis (A) of the first tubular body (13) is substantially vertical.

5. A volumetric metering device as claimed in Claim 4, characterized in that the cover plate (14a) at the bottom end of the first tubular body (13) has a sleeve to which is fitted a pipe (7) along which the liquid is supplied.

6. A volumetric metering device as claimed in Claim 4 or 5, characterized in that said load cell (17) is fixed, outside the first tubular body (13), to the cover plate (14b) at the top end of said first tubular body (13).

7. A volumetric metering device as claimed in any one of Claims 4 to 6, characterized in that said first tubular body (13) is a cylindrical tubular body and is made of transparent material.

8. A volumetric metering device as claimed in any one of the foregoing Claims, characterized in that said ballast (16) comprises a second tubular body (16) made of plastic material, closed at the ends, and filled with sand, cement or similar, so that the specific weight of the second tubular body is greater than that of the liquid inside said vessel (11).

9. A volumetric metering device as claimed in Claim 8, characterized in that said second tubular body (16) extends coaxially with the longitudinal axis (A) of the vessel (11), and is of an axial length approximately equal to but no greater than the axial length of the vessel (11).

10. A volumetric metering device as claimed in any one of the foregoing Claims, characterized by comprising a safety probe (19) for detecting when said vessel (11) is full to capacity.

11. A metering system (2) for metering liquid additives for concrete, characterized by comprising a volumetric metering device (1) for liquids, as claimed in any one of Claims 1 to 10.

12. A system as claimed in Claim 11, characterized by comprising at least one tank (3) for storing liquid additives; at least one pump unit (4) for feeding the liquid additives from said tank (3) to said volumetric metering device (1), and from said volumetric metering device (1) to a user device (5); and at least one nonreturn valve (6) for regulating flow of the liquid additives along the pipes (7, 8, 9) connecting the pump unit (4) respectively to said volumetric metering device (1), to said storage tank (3), and to said user device (5).

13. A system as claimed in Claim 12, characterized by comprising a control unit (10) for driving the pump unit (4) as a function of signals from the volumetric metering device (1), so as to automatically supply, upon command, a predetermined quantity of liquid additives from the tank (3) to the user device (5).
